Europäisches Patentamt

European Patent Office

Office européen des brevets

(19)

(11) Publication number: **0 328 409**
**A2**

# EUROPEAN PATENT APPLICATION

(12)

(21) Application number: **89301301.1**

(22) Date of filing: **10.02.89**

(51) Int. Cl.⁴: **G 02 B 6/44**

(30) Priority: **11.02.88 GB 8803161**

(43) Date of publication of application:
**16.08.89 Bulletin 89/33**

(84) Designated Contracting States:
**AT BE CH DE ES FR GB GR IT LI LU NL SE**

(71) Applicant: **STC PLC**
**10, Maltravers Street**
**London, WC2R 3HA (GB)**

(72) Inventor: **Houghton, Ian**
**40, Lambert Street**
**Newport Gwent NP9 5FW (GB)**

**Hayes, Thomas Oliver Samuel**
**36, York Place**
**Newport Gwent NP9 4GB (GB)**

(74) Representative: **Dennis, Mark Charles et al**
**STC Patents West Road**
**Harlow Essex CM20 2SH (GB)**

(54) **Optical fibre cables.**

(57) An optical fibre cable suitable for use as a drop wire from a street cabinet to a subscriber's premises comprises a compact steel strength member (1), at least one optical fibre (7) and optionally an insulated electrical conductor (8) held in side-by-side relationship by a single plastics extrusion (9).

EP 0 328 409 A2

**Description**

## OPTICAL FIBRE CABLES

This invention relates to optical fibre cables, particularly but not exclusively cables suitable for connection between a subscriber's premises and a cabinet common to a number of such subscribers.

In restructuring the Local Network to bring optical communication links into the subscriber's premises, there is a need for an optical fibre drop wire to replace the currently-used copper pair. Such a drop wire will extend between the subscriber and a cabinet in the street, for example, and in some cases will need to span as far as seventy metres, particularly in rural areas.

It is an object of the present invention to provide an optical fibre drop wire which is rugged and cheap to produce.

According to the present invention there is provided an optical fibre cable comprising a tensile strength member held in side-by-side relationship an optical fibre solely by means of an extruded encapsulation in which said optical fibres are held loosely in a tubular compartment within said encapsulation.

In one embodiment the fibre or fibres are held loosely in a protective tube, and the tubed fibres are fed together with the strength member in side-by-side relationship through suitable tooling in an extruder head where a plastic extrusion is formed around the tubed fibres and the strength member.

In an alternative embodiment the fibres are not already tubed but instead they are fed into suitable tooling side-by-side with the strength member, and the tooling forms a tubular passageway in the final extrusion in which the fibres are loosely housed.

Very preferably the fibres are held in a viscous water blocking medium (such as one sold under the trade name Hyvis) and this is injected either into the tube where the fibres are pre-tubed or, alternatively, injected into the tooling which forms a tube within the overall extrusion to house the fibres.

In another embodiment the fibres are fed together with insulated electrical conductors.

In a further embodiment there is provided a second tensile strength member parallel to the first one and spaced apart therefrom, said fibres being housed in a longitudinal chamber lying between the strength members within the encapsulation.

According to a further aspect of the present invention there is provided an optical fibre cable comprising a tensile strength member formed by a pair of tensile elements in side-by-side relationship, an open channel lying to one side of and between said elements, and a sheath around the strength member and over the channel, there being at least one optical fibre located in said channel.

In one embodiment the tensile strength member has a figure-of-eight configuration defining two such open channels, one lying on one side and the other lying on the other side of said elements and each such channel contains at least one optical fibre.

In a further embodiment the tensile strength member has a generally circular cross sectional configuration with an open surfacial slot running along the strength member to one side of and between said elements. In a further embodiment there is a second surfacial slot lying diametrically opposite the first slot and housing at least one electrical conductor.

In a further embodiment one or more optical fibres held loosely in a tube is fed side-by-side with a tensile strength element and at least one insulated electrical conductor into an extrusion head and encapsulated in and held in triangular contact with one another by extruded plastics material. In a preferred embodiment the tensile strength member and the tubed optical fibres are diametrically opposed, on the one hand, and there are two insulated electrical conductors also diametrically opposed on the other hand.

In order that the invention in its various aspects can be clearly understood reference will now be made to the accompanying drawings in which various embodiments of optical fibre drop wires are shown in transverse cross section.

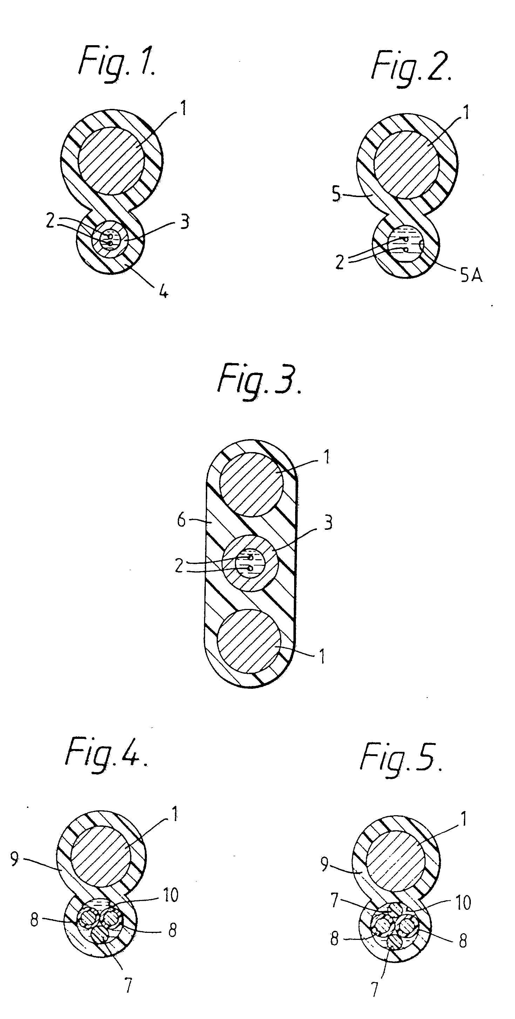

Referring now to Figure 1 of the drawings the optical fibre drop wire shown comprises a tensile strength element 1 formed by a compacted steel strand which, in this embodiment, has a diameter of 1.8mm. The cable also comprises a pair of acrylate coated optical fibres 2 housed loosely in a tubular compartment formed by tube 3 having a diameter of about 1.5mm although it could be larger, say up to 3mm in diameter. There could be only one fibre in the tube 3.

The tube 3 contains a gel-like water blocking compound, for example, that marketed under the trade name Hyvis, and the strength element 1 and the loose-tubed fibres 2 and 3 are encapsulated in the respective part of a low density polyethylene sheath 4 having a figure-of-eight configuration. The strength member is locked firmly to the encapsulating whereas the fibres are loose in the tube 3.

The cable is manufactured in a two-shot operation. Firstly the fibres are tubed loosely in the tube 3 including the injection of the water blocking material, and the tubed fibres are then fed side-by-side with the tensile element 1 through an extruder head which extrudes the low density polyethelene outer sheath 4 in the figure-of-eight configuration shown in the drawing, to thereby hold the tubed fibres and the tensile strength element in their side by side arrangement. The tube 3 will be held firmly by the encapsulation on the same way as electrically insulated wires are held in the plastics sheath of an electrical cable.

Referring now to Figure 2 there is shown an arrangement similar to Figure 1 except that it is manufactured in a one-shot operation because here the pair of optical fibres 2 are loosely housed in a tubular compartment which is formed by the extruded sheath 5. So here the compacted steel strand 1 which is similar to that shown in Figure 1, is fed side-by-side with the pair of optical fibres 2 into an extrusion head having special tooling which will form the tube portion 5A loosely around the fibres 2. Here the water blocking material is injected into the tube portion 5A within the extrusion head.

Referring now to Figure 3 the tensile strength member comprises a pair of compacted steel strands 1 which have been fed in spaced-apart side-by-side relationship with a loose-tubed pair of optical fibres in between, the fibres being identified by the reference numeral 2, as previously, and the loose tube being identified by the reference numeral 3, as previously. This is a two-shot operation because the fibres 2 first have to be provided with the loose tube 3 and then in the second shot of the operation, the loose tubed fibres are fed inbetween and side-by-side with the compacted steel strands 1 into the tooling of the extruder head and a low density polyethelene sheath 6 is created to hold the tensile strength elements 1 and the loose tubed fibres 3 in the mutual arrangement shown in Figure 3 of the drawings. Once again the loose tube would be water blocked with for example Hyvis.

Referring now to Figure 4 of the drawings this optical fibre drop wire comprises a compacted steel strand 1 of identical construction to those previously referred to, and a single optical fibre 7 which is acrylate coated and in addition has further coatings to provide a triple coated fibre. These coatings can be carried out in accordance with our published patent specification No. 2178188.

in contact with and side-by-side with the triple coated optical fibre 7 are two insulated electrical conductors 8.

In compacted steel strand and the insulated insulated electrical conductors and the optical fibre are encapsulated in a low density polyethelene sheath 9 having a figure-of-eight configuration.

The cable is manufactured by feeding the compacted steel strand 1 in side-by-side relationship with the insulated electrical conducted 8 and the triple coated optical fibre 7 and the tooling will create a tubular passageway 10 which embraces the triple coated fibre 7 and the electrical conductors 8 as shown in the drawing.

In this construction the electrical conductors and the optical fibre are not loosely housed in the chamber 10 but are in substantially continuous contact with the inner wall of the chamber 10 throughout the length of the cable.

The electrical conductors are plastics coated copper wire each having a diameter about 1mm and the triple coated optical fibre has a diameter of about .85mm.

This cable constructed is a three-shot operation; firstly the copper wires have to be coated with plastics material in a first operation, the optical fibre has to be provided with its triple coating in a second-shot, and the third-shot is encapsulating the conductors, optical fibre and compacted steel strand in the encapsulation 9.

Referring now to Figure 5 this is very similar to the embodiment of Figure 4 except that there is an extra triple coated fibre 7. Otherwise the construction is the same as that shown in Figure 4. Clearly the tooling in the extrusion head will need to cater for the additional triple coated fibre 7.

The triple coated fibres of Figure 4 and Figure 5 have the fibres held in compression axially by the triple coating so that the fibres can be extended by up to 0.1% without putting the fibre in tension.

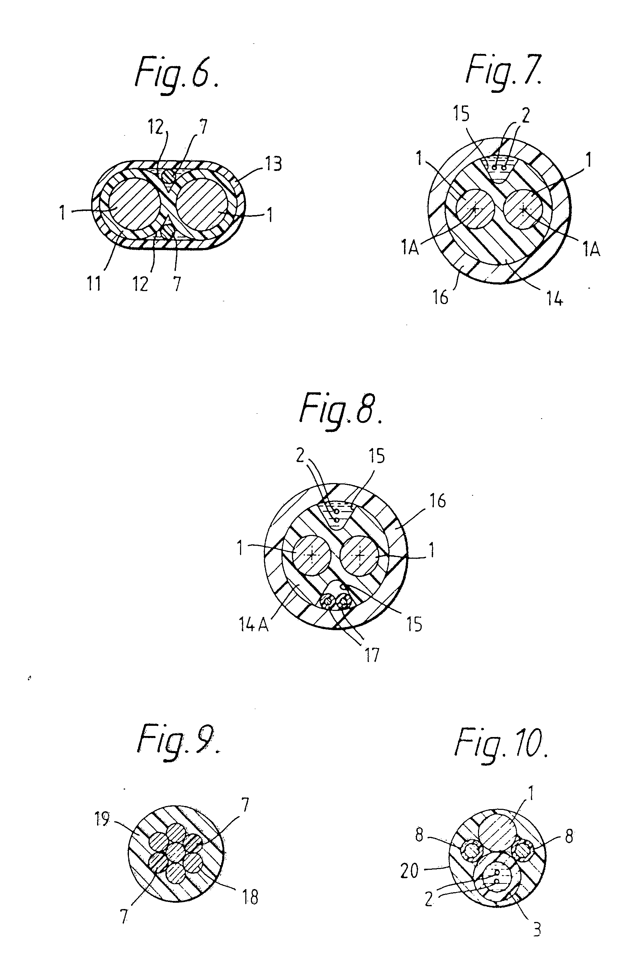

Referring now to Figure 6 there is shown an optical fibre drop wire comprising a pair of compacted steel strands 1, each the same as those previously described, and these form the tensile strength elements of the cable and have been encapsulating in polyethelene sheath 11 to form a figure-of-eight tensile strength member.

This member defines a pair of open channels 12 each lying on opposite sides of the tensile strength elements. In each channel 12 lies a triple coated optical fibre 7 and the open channels and the tensile strength member are covered in an outer polyethelene sheath 13.

As an alternative to the material of the inner sheath 11, polyvinylchloride plastics could be used.

This design is a two-shot operation. It does not provide any electrical power. It may be found necessary to hold the fibres into the open channels 12 by means of a paper tape wrapping prior to extruding the sheath 13 over the top.

Referring now to Figure 7 there is shown an optical fibre drop wire comprising two tensile strength elements in the form of compacted steel strands 1 held in side-by-side relationship in a polyethelene inner jacket 14 which has a generally circular outer surface.

A surfacial longitudinal slot 15 lying to one side of the elements 1 and symmetrically disposed with respect to their central axis 1A. The slot 15 contains a pair of optical fibres 2.

Around the strength member and the slot 15 is extruded an outer polyethylene sheath 16. The sheath could instead be made of another plastics material for example polyvinylchloride and more than two optical fibres such as four or five optical fibres could be accommodated within the slot 15.

This construction is very quick to manufacture because the compacted steel strands can be fed quickly through an extrusion head to form the tensile strength element, which is the strands 1 encapsulated in the plastics sheath 14. The strength members and the fibres will be fed into an extrusion head which will locate the fibres in the slot and extrude the outer sheath 16 around the outside.

Referring now to Figure 8 this is similar to Figure 7 except that there is a second slot 15 diametrically opposed to the first slot 15 shown in the embodiment of Figure 7. The second slot 15 accommodates a pair of insulated copper conductors so that the cable can provide electrical power as well as providing optical transmission. Otherwise the construction and method of manufacture is the same except of course that the fibres and the copper pair 17 are fed simultaneously into their respective slots while the outer sheath is extruded around the slots and the strength member.

In both embodiments of Figure 7 and Figure 8, the optical fibre slot 15 can be filled with Hyvis or some other water blocking material.

Referring now to Figure 9 a steel strength member 18 about 3mm in diameter has seven strands, six stranded around the central one. Two of these strands have been removed to make way for a pair of triple coated optical fibres 7. Around the strength member and the fibres is extruded an outer polyethelene sheath 19 to encapsulate the whole.

One convenient way of manufacturing the embodiment of Figure 9 is to feed the steel strength member towards an extruder head while removing two of the strands from the strength member and replacing them with triple coated optical fibres. In this way the manufacture becomes a one-shot operation.

It would be possible to apply the same principle to a strength member with a larger number of strands and replace some of the other strands with for example plastics insulated copper conductors.

Referring now to Figure 10 the optical fibre drop wire shown comprises a compacted steel strand 1, a pair of insulated electrical conductors 8, a pair of optical fibres 2 housed loosely in a tube 3, the four items being held together and encapsulated by an outer low density polyethylene sheath 20.

The copper wires, the tensile strength element and the tubed optical fibres would be stranded together prior to or as they are having the sheath extruded over them. Preferably a binding is applied around the strength member, tubed optical fibres and insulated conductors to hold them in position prior to entering the extrusion head. This is a two-shot operation and also requires stranding.

In all the embodiments described the optical fibres are normally immersed in the water blocking material. In all the embodiments it would also be possible to plate the steel tensile elements with for example copper so that they could form electrical conductors in the cable. This would not be necessary in those embodiments already incorporating insulated electrical conductors, but would be suitable for those embodiments where there are no electrical conductors shown.

Finally all the embodiments described are relatively small and comparable in size with the conventional telephone cable which enters a subscriber premises and normally houses four insulated electrical conductors.

In all the embodiments like reference numerals indicate like component part of the cables and so for example the compacted steel strand 1 is the same composition and size in all the embodiment. This is not of course to be considered to be a limitation on the scope of the invention claimed, and alternative tensile strength elements are possible e.g. plastics or GRP.

In all the embodiments described there is solely a single one-shot extrusion which holds the loose-tube fibre or fibres, with or without electrical conductors, in this side-by-side relationship with the strength member.

## Claims

1. An optical fibre cable comprising a tensile strength member held in side-by-side relationship an optical fibre solely by means of an extruded encapsulation in which said optical fibres are held loosely in a tubular compartment within said encapsulation.

2. An optical fibre cable comprising a tensile strength member formed by a pair of tensile elements in side-by-side relationship, an open channel lying to one side of said elements, and a sheath around the strength member and over the channel, there being at least one optical fibre located in said channel.

3. An optical fibre cable comprising a stranded strength member, at least one of the strands being formed by an optical fibre, said strength member and said optical fibre being encapsulated in a close-fitting outer sheath.

4. A cable as claimed in any preceding claim comprising an optical fibre tightly clad in a material which provides longitudinal compression of the fibre, whereby to provide strain relief in the cable.

5. A cable as claimed in claim 1 wherein said encapsulation has a figure of eight cross section, said strength member being held firmly in contact with the encapsulation in one of the figure-of-eight parts and said tubular compartment being located in the other of the figure-of-eight parts.

6. A cable as claimed in claim 1 or claim 5, wherein said fibre is located within said tubular compartment along with at least one insulated electrical conductor.

7. A cable as claimed in any preceding claim wherein the compartment or channel is water blocked with a water blocking material.

8. A cable as claimed in any preceding claim wherein the encapsulation is a single shot extrusion which is the sole means by which the loose-tubed fibre and the strength member are held in their side-by-side relationship.

Fig.1.

Fig.2.

Fig.3.

Fig.4.

Fig.5.

*Fig.6.*

*Fig.7.*

*Fig.8.*

*Fig.9.*

*Fig.10.*